(19) Europäisches Patentamt / European Patent Office / Office européen des brevets

(11) **EP 2 088 162 B1**

(12) **EUROPÄISCHE PATENTSCHRIFT**

(45) Veröffentlichungstag und Bekanntmachung des Hinweises auf die Patenterteilung:
**24.08.2011 Patentblatt 2011/34**

(51) Int Cl.:
**C08F 2/24** (2006.01)

(21) Anmeldenummer: **09000243.7**

(22) Anmeldetag: **09.01.2009**

(54) **Verfahren zur Herstellung von Polymerdispersionen, die damit erhaltenen Dispersionen und deren Verwendung**

Method for manufacturing polymer dispersions, dispersions created thereby and their application

Procédé de fabrication de dispersions polymères, dispersions obtenues à l'aide de celles-ci et leur utilisation

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.02.2008 DE 102008008421**

(43) Veröffentlichungstag der Anmeldung:
**12.08.2009 Patentblatt 2009/33**

(73) Patentinhaber: **Celanese Emulsions GmbH**
**61476 Kronberg/Ts. (DE)**

(72) Erfinder:
• **Müller, Harmin, Dr**
**65719 Hofheim (DE)**

• **Petri, Harald**
**65326 Aarbergen (DE)**
• **Drechsel, Thomas**
**61440 Steinbach/Ts (DE)**

(74) Vertreter: **Ackermann, Joachim**
**Postfach 11 13 26**
**60048 Frankfurt am Main (DE)**

(56) Entgegenhaltungen:
DE-A1- 10 335 958    DE-A1-102005 054 904
DE-A1-102006 019 184    DE-A1-102006 020 275

**Beschreibung**

Die vorliegende Erfindung betrifft ein Verfahren zur sehr schnellen Herstellung von Polymerdispersionen und die damit hergestellten Dispersionen. Diese neuen Dispersionen auf der Basis von ausgewählten ethylenisch ungesättigten Monomeren, eignen sich hervorragend für die Formulierung von Klebstoffen und Farben auf Wasserbasis sowie für andere Anwendungen, beispielsweise für die Formulierung von Putzen, den Einsatz in sogenannten Non-wovens oder den Einsatz von Bindemitteln für verschiedenste Substrate.

Dispersionsklebstoffe und Farben auf Basis von Dispersionen sind bekannt und werden kommerziell in großen Mengen hergestellt. In den meisten Fällen werden derartige Systeme mittels Emulsionspolymerisation hergestellt. Ein besonders Problem ist jedoch die Wärmeabfuhr während der exothermen Polymerisation, obwohl dieses Heterophasengemisch üblicherweise zwischen etwa 30 und 60 % Wasser enthält. Die Wärmeabfuhr ist oft der limitierende Faktor die Polymerisation schneller durchzuführen.

Die Polymerisationsverfahren sollen hohe Raum-Zeit-Ausbeuten und gleichzeitg möglichst hohe Sicherheit bei der Reaktionsführung gewährleisten. Ferner sollen dabei Reaktionsprodukte entstehen, die sich möglichst gut reproduzieren lassen und die ein gewünschtes mittleres Molekulargewicht sowie eine gewünschte Molekulargewichtsverteilung aufweisen. Bei der radikalischen Emulsionspolymerisation läßt sich der Prozess über eine Vielzahl von Verfahrensparametern steuern. Bespiele dafür sind Polymerisationstemperatur, Dosiergeschwindigkeit der Reaktanten, Abfuhr der Reaktionswärme, Art und Menge von Bestandteilen des Reaktionssystems oder Aufbau des Polymerisationsreaktors. Entsprechend zahlreich sind die Vorschläge in der Literatur zur Durchführung dieser Polymerisationsreaktionen.

Im Stand der Technik sind mehrere Verfahren beschrieben, die bei der radikalischen Polymerisation entstehende Wärme effizient abzuführen.

In Dechema Monographs, Bd. 137, S. 653-9 (2001) beschreiben P.H.H. Araüjo et al. den Einfluß von Verfahrensparametern auf die Optimierung von Polymerisationsreaktionen von Vinylacetat-Emulsionen. Der Artikel betrifft die Optimierung von Batch-Reaktionen dieses Monomersystems. Als Prozessvariablen werden Temperaturprofile sowie die Zugabegeschwindigkeiten von Monomeren und Initatoren genannt und es wird auf den Einfluß der Wärmeabfuhrkapazität des Reaktors verwiesen. Als Resultat der Optimierung lassen sich deutlich verkürzte Zykluszeiten erzielen.

JP-A-07/082,304 beschreibt die Suspensionspolymerisation von Vinylchlorid in einem mit Rückflusskühler ausgestatteten Reaktor. Um die Polymerisationsdauer zu verkürzen wird dem Reaktionsgemisch vor Erreichen von 60 % des Gesamtumsatzes ein hoch aktiver und öllöslicher Initiator zugesetzt.

Aus der WO 2005/016,977 A1 ist ein Verfahren zur Herstellung wässriger Polymerdispersionen durch radikalisch initiierte Emulsionspolymerisation bekannt. Dieses umfaßt die einstufige Polymerisation von wenigstens einer ethylenisch ungesättigten Verbindung in Anwesenheit wenigstens eines Dispergiermittels sowie wenigstens eines wasserlöslichen und eines öllöslichen Radikalinitiators. Das Verfahres beginnt bei einer Startreaktionstemperatur, die im Verlaufe des Verfahrens auf eine Endreaktionstemperatur ansteigt. Das beschriebene einstufige Verfahren gestattet die Herstellung restmonomerenarmer wässriger Polymerdispersionen ohne den Einsatz zusätzlicher Reduktionsmittel.

In der EP 1 491 558 A1 wird ein Verfahren zur Kontrolle des Aufbaus eines Copolymerisats beschrieben, das sich von mindestens einem langsamer reagierenden und einem schneller reagierenden Comonomeren ableitet. Das Verfahren umfasst die Durchführung von Tests zur Bestimmung der Reaktionsgeschwindigkeiten der beiden Monomeren und die Durchführung der eigentlichen Copolymerisation, wobei die Zugabe des schneller reagierenden Monomeren unter Berücksichtung der durch die Testpolymerisation erhaltenen Daten gesteuert wird.

EP 0 486 262 A1 beschreibt ein Verfahren zur Herstellung von Copolymerdispersionen durch kontrollierte Zugabe der Reaktanten. Die Steuerung der Reaktion erfolgt durch Anpassung der Zugabegeschwindigkeit der Reaktanten und/oder der Polymerisationstemperatur, wobei die Regelung durch Beobachtung der freigesetzten Reaktionswärme und deren Abgleich mit der bekannten Energiebilanz des Reaktionssystems geschieht.

WO 2004/096,871 A1 beschreibt die Verbesserung eines Verfahrens zur Emulsionspolymerisation durch Einsatz eines Systems zweier Initiatoren. Der weniger stabile Initiator wird nach Start der Polymerisation in einer solchen Geschwindigkeit zudosiert, dass das System zu Beginn der Reaktion mit maximaler Kühlkapazität betrieben werden muß. Das Verfahren gestattet hohe Raum-Zeit-Ausbeuten ohne dass die Reaktion außer Kontrolle gerät.

Aus der WO 2004/113,392 A1 ist ein weiteres Verfahren zur radikalischen Polymerisation bekannt, bei dem ein Peroxid zum Einsatz kommt, das bei der Polymerisationstemperatur eine Halbwertszeit von bis zu einer Stunde aufweist. Der Initiator wird mit einer solchen Geschwindigkeit zudosiert, dass das System mit maximaler Kühlkapazität betrieben werden muß und die erzielte Reaktionstemperatur wird überwacht, und durch die Zugabegeschwindigkeit des Initiators auf einem vorgegebenen Wert gehalten. Das Verfahren gestattet Herstellung von Polymeren mit sehr gut reproduzierbaren K-Werten. Das Verfahren wird für die Polymerisation von Vinylchlorid und gegebenenfalls weiteren Comonomeren beschrieben.

Die WO 2005/000,916 A1 beschreibt ein Verfahren zur wässrigen Emulsionspolymerisation, bei dem eine Kombination von organischem Peroxid und einem Stabilisator dafür eingesetzt wird. Wenigstens ein Teil des organischen Peroxids wird der Reaktionsmischung bei Erreichen der Polymerisationstemperatur zugesetzt. Das Verfahren gestattet die Herstellung von Polymeren mit einheitlicherem Molekulargewicht.

In der DE 10 2005 054 904 A1 wird ein Verfahren zur Herstellung von polyvinylalkohol-stabilisierten Latices beschrieben. Das Verfahren wird als Emulsionspolymerisation ausgeführt und ist dadurch gekennzeichnet, dass mindestens 60 % des Gesamtumsatzes bei Temperaturen zwischen 100 und 140°C abläuft. Nach der Beschreibung beträgt die bei der Polymerisation anwesende Menge des Polyvinylalkohols 1 bis 20 Gew. %, bezogen auf das Gesamtmonomergewicht. Im Vergleich zu konventionellen Verfahren der Emulsionspolymerisation, die typischerweise bei Temperaturen von etwa 70°C ablaufen, werden hier erhöhte Reaktionstemperaturen verwendet. Bei diesem Verfahren ist es also zwingend notwendig in Gegenwart von größeren Mengen an Polyvinylalkohol zu polymerisieren. Allerdings beobachtet man unter diesen Polymerisationsbedingungen häufig einen Aufbau von erhöhten Viskositäten, welcher bei der späteren Verarbeitung oder Anwendung störend sein kann.

Nachteile bei den oben beschriebenen Verfahren mit hohen Reaktionstemperaturen sind die Verschlechterung von Produkteigenschaften, wie die Reduktion des Molekulargewichtes bei Polymeren, und die Verschlechterung anderer anwendungstechnischer Eigenschaften, wie beispielsweise bei Farben die Abriebsfestigkeit oder bei Klebstoffen der Wärmestand.

Hauptproblem ist dabei immer, dass auf der einen Seite die Maßnahmen zur Wärmeabfuhr kommerziell sinnvoll sein müssen und auf der anderen Seite die Eigenschaften im Vergleich zu Produkten, die bei tieferen Temperaturen hergestellt worden sind, möglichst erhalten bleiben müssen.

Ausgehend von diesem Stand der Technik bestand die Aufgabe der vorliegenden Erfindung darin, ein Emulsionspolymerisationsverfahren zur Verfügung zu stellen, welches es ermöglicht, in kürzester Zeit und unter Ausnutzung der entstehenden Reaktionswärme Vinylesterpolymerisat-Dispersionen herzustellen, die zugleich hervorragende Produkteigenschaften besitzen, beispielsweise eine vergleichsweise niedrige Viskosität aufweisen.

Durch den Einsatz des erfindungsgemäßen Verfahrens lassen sich beispielsweise Reaktionszeiten um mehr als 50 % reduzieren, ohne dass sich die anwendungstechnischen Eigenschaften der daraus resultierenden Produkte veschlechtern.

Die vorliegende Erfindung betrifft ein Verfahren zur Emulsionspolymerisation von radikalisch polymerisierbaren ethylenisch ungesättigten Monomeren ausgewählt aus der Gruppe der Mono- oder Diester von ethylenisch ungesättigten Mono- oder Dicarbonsäuren mit Alkanolen, der Vinylester und/oder der Vinylaromaten und gegebenenfalls weiteren damit copolymerisierbaren Monomeren bei dem mindestens 60% des Gesamtumsatzes der Polymerisation bei einer Temperatur von 100°C bis 160°C abläuft, dadurch gekennzeichnet, dass die Emulsionspolymerisation in Gegenwart von Emulgatoren und einer Menge von 0 bis 1 Gew. %, bezogen auf die Gesamtmenge der eingesetzten Monomeren, an Schutzkolloid durchgeführt wird.

Überraschenderweise werden bei dem erfindungsgemäßen Verfahren wie bei dem aus DE 10 2005 054 904 A1 bekannten Verfahren Polymere erhalten, die gleiche bzw. nur geringfügig niedrigere Molekulargewichte besitzen, aber dennoch zu vollwertigen anwendungstechnischen Eigenschaften führen. Es wird nicht wie bei anderen Verfahren der Emulsionspolymerisation bei erhöhten Temperaturen, beispielsweise wie bei dem aus DE 103 35 958 A1 bekannten Verfahren, eine besondere Initiatorführung und -art benötigt, sondern es kann in bekannter Weise gearbeitet werden.

Insbesondere können die üblichen wasserlöslichen Initiatoren verwendet werden, da öllösliche Initiatoren in der Emulsionspolymerisation üblicherweise auf Grund des schlechten Transportes über die Wasserphase weniger effizient sind und teilweise auch zur Suspensionspolymerisation führen, wobei große Teilchen entstehen, was für einige Anwendungen unerwünscht ist. Der große Vorteil zeigt sich also darin, dass das erfindungsgemäße Verfahren, eine wesentlich wirtschaftlichere Herstellung der gewünschten Produkte, ohne Einbußen auf ihre Qualität und Leistungsfähigkeit, ermöglicht und das erfindungsgemäße Verfahren auch im kommerziellen Maßstab möglich ist.

Die Herstellung der Homo- und Copolymerisate erfolgt nach dem Emulsionspolymerisationsverfahren, wobei die Startpolymerisationstemperatur im allgemeinen aber nicht notwendigerweise weniger als 100°C beträgt. Mindestens 60% des Gesamtumsatzes der Polymerisation, bevorzugt mindestens 70%, besonders bevorzugt mindestens 80% läuft bei Temperaturen von 100°C bis 160°C ab, bevorzugt bei 100 bis 140 und ganz besonders bevorzugt bei 100 bis 120 °C ab.

Das erfindungsgemäße Verfahren wird bei höheren Temperaturen als bei herkömmlichen Verfahren der Emulsionspolymerisation durchgeführt. Aus Gründen des apparativen Aufwands erscheint eine Temperatur von mehr als 160°C nicht sinnvoll, obgleich auch bei höheren Temperaturen gearbeitet werden könnte.

Bei Temperaturen unterhalb von 100°C verlängert sich dahingegen die Betriebszeit für den Polymerisationsschritt erheblich, so dass dieser Temperaturbereich aus betriebswirtschaftlichen Gründen weniger gut geeignet ist. Außerdem entstehen bei diesen Temperaturen wieder deutlich niedrigere Molekulargewichte und es treten weniger Pfropfreaktionen auf, was zu schlechteren anwendungstechnischen Eigenschaften führt.

Die erforderliche Kühlkapazität K lässt sich durch die in DE 10 2005 054 904 A1 beschriebenen Gleichungen (1) und (2) ermitteln, also aus

$$K = \Delta T * \ddot{U} * W \qquad (1)$$

und aus

$$\Delta T = T_r - T_k \qquad (2),$$

wobei
Ü den Wärmeübergangskoeffizienten,
W eine Konstante, welche unter anderem die Wärmekapazitäten enthält,
$T_k$ die Kühlwassertemperatur, und
$T_r$ die Reaktortemperatur bedeuten.

Ansonsten entspricht das erfindungsgemäße Verfahren im wesentlichen dem aus DE 10 2005 054 904 A1 bekannten Verfahren mit der wesentlichen Abänderung, dass mit emulgatorstabilisierten Polymerisationssystemen oder mit Mischsystemen gearbeitet werden kann, welche Emulgatoren und geringe Mengen an Schutzkolloid, wie Polyvinylalkohol, enthalten und dass gegebenenfalls auch bei höheren Temperaturen als in diesem Dokument angegeben gearbeitet werden kann. Das bedeutet, dass die Pfropfung von Polyvinylalkohol keine oder nur eine untergeordnete Rolle spielt.

In bevorzugten Ausführungsformen des erfindungsgemäßen Verfahrens wird die Emulsionspolymerisation in Gegenwart einer von Menge von 0,05 bis 1 Gew. %, bezogen auf die Gesamtmenge der eingesetzten Monomeren, an Schutzkolloid durchgeführt oder alternativ in Abwesenheit von Schutzkolloid.

In einer weiteren bevorzugten Ausführungsform des erfindungsgemäßen Verfahrens laufen mindestens 60%, insbesondere mindestens 70 % des Gesamtumsatzes der Polymerisation bei einer Temperatur von 100°C bis 140°C, vorzugsweise von 100 bis 120°C ab.

Die radikalische Emulsionspolymerisation kann in an sich bekannter Weise im Batchverfahren, im Zulaufverfahren, im kombinierten Batch/Zulauf-Verfahren oder im kontinuierlichen Verfahren, wie beispielsweise Loop oder Kaskadenreaktor mit mehreren hintereinander geschalteten Reaktoren, durchgeführt werden.

Vorzugsweise wird dabei im kombinierten Batch/Zulauf-Verfahren oder besonders bevorzugt im Zulaufverfahren gearbeitet, wobei üblicherweise ein Teil der eingesetzten Monomeren, beispielsweise 1 bis 50 Gew. %, bevorzugt 5 - 30 Gew. %, zum Starten der Polymerisation vorgelegt werden. Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen zu Beginn der Polymerisation eine Saatpolymerisation durchzuführen oder eine separat hergestellte Saat vorzulegen.

Der zur Stabilisierung mitverwendete Emulgator und/oder das gegebenenfalls eingesetzte Schutzkolloid kann entweder zu Beginn der Polymerisation komplett vorgelegt werden oder partiell vorgelegt und partiell dosiert werden oder komplett während der Durchführung der Polymerisation zudosiert werden. Bevorzugt wird der gesamte Emulgator oder ein großer Teil des Emulgators vorgelegt.

Das erfindungsgemäße Verfahren zeichnet sich im Vergleich zu herkömmlichen Verfahren der Emulsionspolymerisation durch deutlich reduzierte Polymerisationszeiten aus. Eine Emulsionspolymerisation gliedert sich in eine Aufheiz- und Startphase, in eine Polymerisationsphase, in eine Nachpolymerisationsphase und in eine Abkühlphase, in welcher gegebenenfalls zusätzlich eine Redoxbehandlung vorgenommen wird. Die Dauern von Aufheiz- und Startphase sowie der Abkühlphase sind von den im Einzelfall verwendeten Reaktoren abhängig, beispielsweise von Reaktorart, - beschaffenheit und -größe. Unter Polymerisationsphase wird im Rahmen dieser Beschreibung diejenige Phase verstanden, die mit dem Beginn des Monomerumsatzes, erkennbar am Einsetzen der Wärmetönung der Polymerisation, beginnt und die mit dem Erreichen von 95 % des Monomerumsatzes endet. In der Nachpolymerisationsphase (diese dauert üblicherweise zwischen 30 und 60 Minuten) wird der überwiegende Teil der restlichen 5 % der Monomeren umgesetzt; dieses kann bei gleicher oder höherer Temperatur erfolgen als bei der Temperatur der Polymerisationsphase. Während oder nach der Abkühlphase schließt sich üblicherweise noch eine Entfernung der Restmonomeren an. Dieses kann im gleichen Reaktor oder in einem anderen Reaktor erfolgen. Der große Vorteil des erfindungsgemäßen Verfahrens gegenüber herkömmlichen Polymerisationsverfahren ist in einer drastischen Verkürzung der Polymerisationsphase zu sehen.

Typischerweise beträgt die Dauer der Polymerisationsphase weniger als 2 Stunden, insbesondere weniger als 1,5 Stunden, und ganz besonders bevorzugt weniger als 1 Stunde.

Beim erfindungsgemäßen Polymerisationsverfahren können die Monomeren zum Teil vor der Polymersation vorgelegt und der Rest im Verlaufe der Polymerisation zudosiert werden. Alternativ kann auch die Gesamtmonomermenge im Verlauf der Polymerisation zudosiert werden.

In einer besonders bevorzugten Ausführungsform des erfindungsgemäßen Verfahrens werden bis zu 50 Gew. %, vorzugsweise 5 bis 30 Gew. % der Gesamtmenge an Monomer vor dem Beginn der Emulsionspolymerisation vorgelegt und der Rest der Monomeren wird während der Polymerisationsphase in die Reaktionsmischung dosiert. Die Vorlage kann gegebenenfalls neben dem Monomer noch einen Saatlatex enthalten.

Im erfindungsgemäßen Verfahren können die oben definierten Monomeren einzeln eingesetzt werden oder in Form von beliebigen Kombinationen der oben definierten Monomeren, sofern diese miteinander copolymerisierbar sind. Neben Homopolymerisaten können Copolymerisate erzeugt werden. Letztere können eine homogene oder eine heterogene Partikelmorphologie aufweisen, indem beispielsweise das Ethylenventil erst nach einem bestimmten Umsatz, z.B. 10 - 60 %, geöffnet wird und somit eine Druckstufe entsteht, die zu einer heterogenen Partikelmorphologie führt. Es können aber auch anderer Monomerprofile genutzt werden, die dem Fachmann bekannt sind, um heterogene Partikelmorphologien zu erzeugen.

Es können Monomermischungen eingesetzt werden oder vorzugsweise können verschiedene Monomere oder Monomergemische in getrennten Zuläufen verwendet werden. In einer bevorzugten Ausführungsform werden Copolymere mit heterogener Morphologie erzeugt, indem ein erstes Monomer oder eine erste Mischung von Monomeren zu einem ersten Polymer polymerisiert wird und danach ein zweites Monomer oder eine zweite Mischung von Monomeren auf das erste Polymer polymerisiert wird.

Bevorzugt werden "harte" und "weiche" Monomere miteinander kombiniert. Unter harten Monomeren sind im Rahmen dieser Beschreibung Monomere zu verstehen, deren Homopolymerisate eine Glasübergangstemperatur (DSC) von mehr als 25°C aufweisen. Unter weichen Monomeren sind im Rahmen dieser Beschreibung Monomere zu verstehen, deren Homopolymerisate eine Glasübergangstemperatur (DSC) von kleiner gleich 25°C aufweisen. Besonders bevorzugt werden erste Monomere polymerisiert, die aus harten Monomeren bestehen oder einen Anteil von mehr als 50 Gew. %, bezogen auf den Gesamtanteil der ersten Monomeren, an harten Monomeren enthalten, gefolgt von einer Polymerisation von zweiten Monomeren auf das entstandene Polymerisat, die aus weichen Monomeren bestehen oder einen Anteil von mehr als 50 Gew. %, bezogen auf den Gesamtanteil der zweiten Monomeren, an weichen Monomeren enthalten.

Die erfindungsgemäße Emulsionspolymerisation wird vorzugsweise zumindest teilweise unter Druck durchgeführt. Übliche Betriebsdrücke bewegen sich im Bereich von 0,1 bis 120 bar Überdruck, insbesondere im Bereich von 1 bis 80 bar Überdruck und ganz besonders bevorzugt im Bereich von 10 bis 80 bar Überdruck.

Insbesondere beim Arbeiten mit gasförmigen Monomeren, wie Ethylen, werden diese unter Druck zugegeben.

Wird im erfindungsgemäßen Verfahren mit einer Druckstufe gearbeitet, so wird in einer Variante dabei die Dosierung des gasförmigen Monomeren erst begonnen, nachdem 10 - 50 Gew. % der flüssigen Monomeren dem Reaktionsgemisch umgesetzt worden sind, so dass heterogene Partikelmorphologien entstehen.

Wird im erfindungsgemäßen Verfahren mit einer Druckstufe gearbeitet so wird in einer anderen Variante dabei mit der Dosierung des gasförmigen Monomeren bereits zu Beginn der Emulsionspolymerisation begonnen, so dass die Umsetzung zusammen mit den flüssigen Monomeren erfolgt, wobei homogene Partikelmorphologien entstehen.

Wird im erfindungsgemäßen Verfahren ein Saatlatex verwendet, so wird dieser vor Beginn der Emulsionspolymerisation eingesetzt und in einer Menge, die vorzugsweise 1 - 20 Gew. %, insbesondere 1 - 10 Gew. % der entstehenden Dispersion ausmacht.

Die durch das erfindungsgemäße Verfahren erzeugten Emulsionspolymerisate sind im Wesentlichen auf Basis von ein oder mehreren ethylenisch ungesättigten Verbindungen aufgebaut; dabei handelt es sich vorzugsweise um von Estern ethylenisch ungesättigter Mono- oder Dicarbonsäuren und/oder von Vinylestern und/oder von Alkenylaromaten abgeleitete Polymere.

Als Basis für die genannten Polymerklassen kommen prinzipiell folgende Gruppen an Hauptmonomeren in Betracht:

Eine Gruppe bilden Vinylester von ein bis achtzehn Kohlenstoffatome aufweisenden Monocarbonsäuren, beispielsweise Vinylformiat, Vinylacetat, Vinylpropionat, Vinylisobutyrat, Vinylvalerat, Vinylvalerat, Vinylpivalat, Vinyl-2-ethylhexanoat, Vinyldecanoat, Isopropenylacetat, Vinylester von gesättigten verzweigten Monocarbonsauren mit 5 bis 15 Kohlenstoffatomen im Säurerest, insbesondere Vinylester der Versatic™-Säuren, Vinylester von langerkettigen gesättigten oder ungesättigten Fettsäuren wie beispielsweise Vinyllaurat, Vinylstearat sowie Vinylester der Benzoesäure und substituierter Derivate der Benzoesäure wie Vinyl-p-tert.-butylbenzoat. Unter diesen ist jedoch Vinylacetat als Hauptmonomer besonders bevorzugt.

Eine weitere Gruppe von Hauptmonomeren, die neben den Vinylestern und/oder Estern ethylenisch ungesättigter Mono- oder Dicarbonsäuren und/oder Alkenylaromaten eingesetzt werden können, bilden aliphatische, monoolefinisch oder diolefinisch ungesättigte, gegebenenfalls halogen-substituierte Kohlenwasserstoffe, wie Ethen, Propen, 1-Buten, 2-Buten, Isobuten, konjugierte $C_4$-$C_8$-Diene, wie 1,3-Butadien, Isopren, Chloropren, Vinylchlorid, Vinylidenchlorid, Vinylfluorid oder Vinylidenfluorid.

Eine weitere Gruppe von Hauptmonomeren bilden Ester ethylenisch ungesättigter Mono- oder Dicarbonsäuren,

vorzugsweise Ester $\alpha$, $\beta$-ethylenisch ungesättigter $C_3$-$C_8$-Mono- oder Dicarbonsäuren, mit vorzugsweise $C_1$-$C_{18}$-Alkanolen und insbesondere mit $C_1$-$C_8$-Alkanolen oder mit $C_5$-$C_8$-Cycloalkanolen. Bei den Estern der Dicarbonsäuren kann es sich um Halbester oder vorzugsweise um Diester handeln. Geeignete $C_1$-$C_8$-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Beispiele sind Ester der Acrylsäure, der Methacrylsäure, der Crotonsäure, der Maleinsäure, der Itaconsäure, Citraconsäure oder der Fumarsäure wie (Meth)acrylsäuremethylester, (Meth)acrylsäureethylester, (Meth)acrylsäure-isopropylester, (Meth)acrylsäure-n-butylester, (Meth)acrylsäureisobutyl-ester, (Meth)acrylsäure-1-hexylester, (Meth)acrylsäure-tert-butylester, (Meth)acrylsäure-2-ethylhexylester, Di-n-methylmaleinat oder -fumarat, Di-n-ethylmaleinat oder -fumarat, Di-n-propylmaleinat oder -fumarat, Di-n-butylmaleinat oder -fumarat, Diisobutylmaleinat oder -fumarat, Di-n-pentylmaleinat oder -fumarat, Di-n-hexylmaleinat oder fumarat, Dicyclohexyl-maleinat oder -fumarat, Di-n-heptylmaleinat oder -fumarat, Din-octylmaleinat oder -fumarat, Di-(2-ethylhexyl)maleinat oder -fumarat, Di-n-nonylmaleinat oder -fumarat, Di-n-decylmaleinat oder -fumarat, Di-n-undecylmaleinat oder -fumarat, Dilaurylmaleinat oder -fumarat , Dimyristiylmaleinat oder -fumarat, Dipalmitoylmaleinat oder -fumarat, Di-stearylmaleinat oder -fumarat und Diphenylmaleinat oder -fumarat.

Eine weitere Gruppe von Hauptmonomeren bilden die Alkenylaromaten. Dabei handelt es sich um Monoalkenylaromaten. Beispiele dafür sind Styrol, Vinyltoluol, Vinylxylol, $\alpha$-Methylstyrol oder o-Chlorstyrol.

Die genannten Monomere bilden in der Regel die Hauptmonomeren, die in Bezug auf die Gesamtmenge der nach dem Verfahren der radikalischen wässrigen Polymerisation zu polymerisierenden Monomeren normalerweise einen Anteil von mehr als 50 Gew. %, bevorzugt mehr als 75 % auf sich vereinen.

Bevorzugte Hauptmonomere sind auf Basis folgender Polymerklassen aufgebaut:

Homo-oder Copolymere ein oder mehrerer Vinylester, insbesondere von Vinylacetat; Copolymere von Vinylestern mit Estern $\alpha$, ethylenisch ungesättigter $C_3$-$C_8$-Mono- oder Dicarbonsäuren mit $C_1$-$C_8$-Alkanolen, insbesondere Ester der (Meth)acrylsäure und Malein-/oder Fumarsäure; Copolymere der Vinylester, insbesondere Vinylacetat, mit Ethen; Terpolymere aus Vinylestern, Ethen und Estern $\alpha$, ethylenisch ungesättigten $C_3$-$C_8$-Mono- oder Dicarbonsäuren mit $C_1$-$C_8$-Alkanolen, insbesondere Estern der (Meth)acrylsäure und Malein-/oder Fumarsäure; Homo- oder Copolymere von Estern der (Meth)acrylsäure; Copolymere des Styrols mit Butadien und/oder Estern der $\alpha$, $\beta$ethylenisch ungesättigten $C_3$-$C_8$-Mono- oder Dicarbonsäuren mit $C_1$-$C_8$-Alkanolen, insbesondere Estern der (Meth)acrylsäure.

Besonders bevorzugt werden durch das erfindungsgemäße Verfahren Polyvinylester hergestellt; dabei handelt es sich um Homo- oder Copolymere, die sich von Vinylestern als Hauptmonomeren ableiten. Ganz besonders bevorzugt davon sind die Vinylester-Ethylen-Copolymerisate, die gegebenenfalls noch weitere von damit copolymerisierbaren Monomeren abgeleitete Struktureinheiten aufweisen können.

Die im erfindungsgemäßen Verfahren eingesetzten Monomeren sind so auszuwählen, dass ein Polymerisat oder Copolymerisat mit den für die gewünschte Endanwendung benötigten Eigenschaften entsteht. Dieses kann durch Einstellung der Glasübergangstemperatur der entstehenden Polymerisate und der entsprechenden Copolymerisationsparameter in an sich bekannter Weise erfolgen.

Selbstverständlich können weitere Comonomere, welche die Eigenschaften in gezielter Weise modifizieren, bei der Polymerisation mitverwendet werden. Solche Hilfsmonomere werden im Normalfall lediglich als modifizierende Monomere in Mengen, bezogen auf die Gesamtmenge der zu polymerisierenden Monomeren, von weniger als 50 Gew. %, in der Regel von weniger als 20, vorzugsweise zu weniger als 10 Gew. % einpolymerisiert.

Diese Monomeren dienen zur weiteren Stabilisierung der Dispersionen, können durch Vernetzung während der Polymerisation oder während der Verfilmung die Filmkohäsion oder andere Eigenschaften verbessern und/oder durch eine geeignete Funktionalität mit einer weiteren in der Dispersion enthaltenen Komponente unter Vernetzung reagieren.

Monomere, die zur weiteren Stabilisierung dienen können, sind in der Regel Monomere, die eine Säurefunktion aufweisen und/oder deren Salze. Zu dieser Gruppe zählen beispielsweise $\alpha$,$\beta$-monoethylenisch ungesättigte Mono- und Dicarbonsäuren mit 3 bis 10 C-Atomen, ethylenisch ungesättigte Sulfonsäuren, ethylenisch ungesättigte Phosphonsäuren oder Dihydrogenphosphate und deren wasserlösliche Salze, z. B. deren Natriumsalze. Bevorzugte Monomere aus dieser Gruppe sind Vinylsulfonsäure und ihre Alkalisalze, Acrylamidopropansulfonsäure und ihre Alkalisalze, ethylenisch ungesättigte $C_3$-$C_8$-Carbonsäuren und $C_4$-$C_8$-Dicarbonsäuren, z. B. Itaconsäure, Crotonsäure, Vinylessigsäure, Acrylamidoglykolsäure und insbesondere Acrylsäure und Methacrylsäure.

Beispiele für vernetzende Hilfsmonomere sind zwei oder mehr Vinylreste aufweisende Monomere, zwei oder mehr Vinylidenreste aufweisende Monomere sowie zwei oder mehr Alkenylreste aufweisende Monomere. Besonders vorteilhaft sind dabei die Di-Ester zweiwertiger Alkohole mit $\alpha$,$\beta$-monoethylenisch ungesättigten Monocarbonsäuren, unter denen die Acryl und Methacrylsäure bevorzugt sind, die Di-Ester zweiwertiger Carbonsäuren mit ethylenisch ungesättigten Alkoholen, sonstige Kohlenwasserstoffe mit zwei ethylenisch ungesättigten Gruppen oder die Di-Amide zweiwertiger Amine mit $\alpha$,$\beta$-monoethylenisch ungesättigten Monocarbonsäuren.

Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate oder -methacrylate und Ethylenglykoldiacrylate oder -methacrylate, 1,2-Propylenglykoldimethacrylat, 1,3-Propylenglykol-dimethacrylat, 1,3-Butylenglykoldimethacrylat, 1,4-Butylenglykoldimethacrylate, Hexandioldiacrylat, Pentaerythroldiacrylat sowie Divinylbenzol, Vinylmethacrylat, Vinylacrylat, Vinylcrotonat, Allylmethacrylat, Allylacrylat, Diallylmaleat, Diallylfumarat, Diallylphthalat, Methylenbisacrylamid, Cyclopentadienylacrylat, Divinyladipat oder Methylenbisacrylamid.

Es können aber auch Monomere mit mehr als zwei Doppelbindungen eingesetzt werden, beispielsweise Tetraalloxyethan, Trimethylolpropantriacrylat oder Triallylcyanurat.

Eine weitere Gruppe von Hilfsmonomeren ist geeignet, entweder durch Selbstvernetzung oder mit einem in der Dispersion enthaltenen geeigneten monomeren Reaktionspartner, beispielsweise einem Polyaldehyd, unter ausgewählten Bedingungen unter Vernetzung zu reagieren.

Zu dieser Gruppe gehören Monomere mit N-funktionellen Gruppen, darunter insbesondere (Meth)-acrylamid, Allylcarbamat, Acrylnitril, Methacrylnitril, N-Methylol(meth)acrylamid, N-Methylolallylcarbamat sowie die N-Methylolester, - alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)-acrylamid, N-Dimethylaminopropyl(meth)-acrylamid, N-Methyl(meth)acrylamid, N-Butyl(meth)acrylamid, N-Cyclohexyl(meth)-acrylamid, N-Dodecyl(meth)acrylamid, N-Benzyl(meth)acrylamid, p-Hydroxyphenyl-(meth)acrylamid, N-(3-Hydroxy-2,2-dimethylpropyl)methacrylamid, Ethylimid-azolidon(meth)acrylat, N-(Meth)acryloyloxyethylimidazolidin-1-on, N-(2-Methacryl-amidoethyl)imidazolin-2-on, N-[3-Allyloxy-2-hydroxypropyl]aminoethyl]imidazolin-2-on, N-Vinylformamid, N-Vinylpyrrolidon oder, N-Vinylethylenharnstoff.

Eine weitere Gruppe von Hilfsmonomeren bilden hyroxyfunktionelle Monomere wie die Methacrylsäure- und Acrylsäure-$C_1$-$C_9$-Hydroxyalkylester, wie n-Hydroxyethyl-, n-Hydroxypropyl- oder n-Hydroxybutylacrylat und -methacrylat sowie deren Addukte mit Ethylenoxid oder Propylenoxid,

Eine weitere Gruppe von Hilfsmonomeren bilden solche, die über Carbonylgruppen vernetzbar oder selbstvernetzend sind. Beispiele sind Diacetonacrylamid, Allylacetoacetat, Vinylacetoacetat sowie Acetoacetoxyethylacrylat oder - methacrylat.

Eine weitere Gruppe von Hilfsmonomeren besteht aus Silangruppen enthaltenden ethylenisch ungesättigten Monomeren z. B. Vinyltrialkoxysilane, wie Vinyltrimethoxysilan, Vinyltriethoxysilan, Alkylvinyldialkoxysilane oder (Meth)acryloxyalkyltrialkoxysilane, z. B. (Meth)acryloxyethyltrimethoxysilan, oder(Meth)acryloxypropyltrimethoxysilan.

Eine weitere Gruppe von Hilfsmonomeren besteht aus epoxygruppenhaltigen, ethylenisch ungesättigten Monomeren wie beispielsweise Allylglycidylether, Methacrylglycidylether, Butadienmonoepoxide, 1,2-Epoxy-5-hexen, 1,2-Epoxy-7-octen, 1,2-Epoxy-9-decen, 8-Hydroxy-6,7-epoxy-1-octen, 8-Acetoxy-6,7-epoxy-1-octen, N-(2,3-Epoxy)-propylacrylamid, N-(2,3-Epoxy)-propylmethacrylamid, 4-Acrylamidophenyl-glycidylether, 3-Acrylamidophenylglycidylether, 4-Methacrylamidophenyl-glycidylether, 3-Methacrylamidophenylglycidylether, N-Glycidoxymethylacrylamid, N-Glycidoxypropylmethacrylamid, N-Glycidoxyethylacrylamid, N-Glycidoxyethyl-methacrylamid, N-Glyctdoxy-propylacrylamid, N-Glycidoxypropylmethacrylamid, N-Glycidoxybutylacrylamid, N-Glycidoxybutylmeth-acrylamid, 4-Acrylamidomethyl-2,5-dimethylphenylglycidylether, 4-Methacrylamido-methyl-2,5-dimethyl-phenyl-glycidylether, Acrylamidopropyldimethyl-(2,3-epoxy}-propyl-ammoniurnchlorid, Methacrylamidopropyldimethy-(2,3-epoxy)-propyl-ammoniumchlorid und Glycidylmethacrylat.

Ganz besonders bevorzugt werden mit dem erfindungsgemäßen Verfahren Copolymere der Vinylester, insbesondere Vinylacetat, mit Ethen und ethylenisch ungesättigten Epoxidverbindungen, insbesondere Glycidylacrylat oder Glycidylmethacrylat sowie Copolymere der Vinylester, insbesondere Vinylacetat, mit Ethen und ethylenisch ungesättigten Silanverbindungen, insbesondere Trialkoxysilylpropylacrylat oder -methacrylat (bzw. Vinyltrialkoxysilane) hergestellt. Weitere bevorzugte Copolymere können gegebenenfalls zu den oben genannten Struktureinheiten noch weitere von Acrylsäureestern oder von Methacrylsäureestern, wie von Butylacrylat und/oder von 2-Ethylhexylacrylat, abgeleitete Struktureinheiten enthalten.

Bevorzugt hergestellt werden Vinylacetat Homopolymerisate, Copolymerisate von Vinylacetat mit einem oder mehreren weiteren Vinylestern, wie mit Vinylestern mit 1 bis 12 C-Atomen im Carbonsäurerest, z.B. Vinylpropionat, Vinyllaurat, Vinylester von α-verzweigten Carbonsäuren mit 9 bis 11 C-Atomen, wie VeoVa9, VeoVa10, VeoVa11 der Firma Resolution Europe BV, Hoogvliet, Niederlande; Copolymerisate von Vinylacetat mit einem oder mehreren weiteren Vinylestern und mit einem oder mehreren Acrylsäureestern und/oder Methacrylsäureestern, Copolymerisate von Vinylacetat mit 1 bis 70 Gew. % Ethylen, besonders bevorzugt 5 bis 40 Gew. % Ethylen; Copolymerisate von Vinylacetat mit 1 bis 40 Gew. -% Ethylen und 1 bis 50 Gew.-% von einem oder mehreren weiteren Comonomeren aus der Gruppe Vinylester mit 1 bis 12 C-Atomen im Carbonsäurerest, wie Vinylpropionat, Vinyllaurat, Vinylester von α-verzweigten Carbonsäuren mit 9 bis 11 C-Atomen, wie VeoVa9, VeoVa10, VeoVa11 der Firma Resolution Europe BV, Hoogvliet, Niederlande; Copolymerisate von Vinylacetat, 1 bis 40 Gew.-% Ethylen und vorzugsweise 1 bis 60 Gew.-% (Meth)acrylsäureester von unverzweigten oder verzweigten Alkoholen mit 1 bis 15 C-Atomen, insbesondere n-Butylacrylat oder 2-Ethylhexylacrylat; und Copolymerisate mit 30 bis 75 Gew-% Vinylacetat, 1 bis 30 Gew.-% Vinyllaurat oderVinylester einer α-verzweigten Carbonsäure mit 9 bis 11 C-Atomen, sowie 1 bis 30 Gew.-% (Meth)acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew. % Ethylen enthalten; Copolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, vorzugsweise ethylenisch ungesättigte Epoxidverbindungen und/oder ethylenisch ungesättigte Silanverbindungen, und sich die Angaben in Gew.-% auf jeweils 100 Gew.-% aufaddieren.

Die Monomerauswahl beziehungsweise die Auswahl der Gewichtsanteile der Comonomere erfolgt dabei so, dass im allgemeinen eine Glasübergangstemperatur $T_g$ von -70°C bis +110°C, vorzugsweise -50°C bis + 70°C, ganz besonders bevorzugt von -30°C bis +40°C resultiert. Die Glasübergangstemperatur $T_g$ der Polymerisate kann in bekannter Weise mittels Differential Scanning Calorimetry (DSC) ermittelt werden. Die $T_g$ kann auch mittels der Fox-Gleichung in an sich bekannter Weise näherungsweise vorausberechnet werden.

Das erfindungsgemäße Verfahren wird in Gegenwart von Emulgatoren und gegebenenfalls in Gegenwart von geringen Mengen von Schutzkolloiden durchgeführt. Art und Menge der Stabilisatoren sind im Einzelfall so auszuwählen, dass die erforderliche Stabilität der Dispersion gewährleistet ist und die geforderten anwendungsspezifischen Tests erreicht werden. Dem Fachmann sind die Auswahlkriterien dafür bekannt.

Emulgatoren und gegebenenfalls Schutzkolloide sind während der Polymerisation zugegen. Diese können aber auch noch danach zugegeben werden.

Als Emulgatoren werden in der Regel nichtionische Emulgatoren, ionische Emulgatoren oder Kombinationen von nichtionischen mit ionischen Emulgatoren, vorzugsweise mit anionischen Emulgatoren, eingesetzt.

Beispiele für nichtionische Emulgatoren sind Acyl-, Alkyl-, Oleyl- und Alkylaryloxethylate. Diese Produkte sind beispielsweise im Handel unter der Bezeichnung Genapol®, Emulsogen® oder Lutensol® erhältlich. Hierunter fallen beispielsweise ethoxilierte Mono-, Di- und Tri-Alkylphenole (EO-Grad: 3 bis 80, Alkylsubstituentenrest: $C_4$ bis $C_{12}$) sowie ethoxilierte Fettalkohole (EO-Grad: 3 bis 80; Alkylrest: $C_8$ bis $C_{36}$), speziell $C_{12}$-$C_{14}$-Fettalkohol(3-80)ethoxilate, $C_{13}C_{15}$-Oxoalkohol(3-80)ethoxilate, $C_{16}C_{18}$-Fettalkohol(11-80)ethoxilate, $C_{10}$-Oxoalkohol(3-80)ethoxilate, $C_{13}$-Oxoalkohol(3-80)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-80)-Ether von Oleylalkohol sowie die Polyethenoxid(4-80)-Ether von Nonylphenol. Besonders geeignet sind die Polyethylenoxid(4-80)-Ether von Fettalkoholen, insbesondere von Oleylalkohol. Es lassen sich auch Gemische von nichtionischen Emulgatoren einsetzen.

Anstelle von oder zusätzlich zu nichtionischen Emulgatoren können ionische Emulgatoren, vorzugsweise anionische Emulgatoren verwendet werden. Beispielhaft genannt seien Natrium-, Kalium- und Ammoniumsalze von geradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfonierungs- und/oder Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate Dimethyldialkyl($C_8$-$C_{18}$)-ammoniumchlorid, und ihre Sulfonierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylen-glykolethern von einwertigen aliphatischen Alkoholen der Kettenlänge $C_{10}$-$C_{12}$ (Di-Natriumsalz), Sulfobemstein-säure-4-Ester mit Polyethylenglykolnonylphenylether (Di-Natriumsalz), Sulfobernsteinsäure-bis-cyclohexylester (Natriumsalz), Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenylether-disulfonsaures Natrium sowie Natriumlaurylsulfat, oder ethoxyliertes Natriumlaurylethersulfat (EO-Grad 3-80) oder Natrium-dodecylbenzolsulfonat. Es lassen sich auch Gemische von ionischen Emulgatoren einsetzen.

Die Menge an Emulgatoren, bezogen auf die Gesamtmenge der eingesetzten Monomeren, beträgt typischerweise bis zu 10 Gew. %, vorzugsweise 0,1 bis 6,0 Gew. %, besonders bevorzugt 0,5 bis 5,0 Gew. % und ganz besonders bevorzugt 1,0 bis 4,0 Gew. %.

Als Schutzkolloid, also als polymerer Stabilisator, eignen sich alle dem Fachmann dafür geeigneten Verbindungen. Beispiele dafür sind Polyvinylalkohole; Polyvinylacetale; Polyvinylpyrrolidone; Polysaccharide in wasserlöslicher Form, wie Stärken (Amylose und Amylopectin), modifizierte Stärken, Cellulosen und deren Carboxymethyl-, Methyl-, Hydroxyethyl-, Hydroxypropyl-Derivate; Proteine, wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfon-säuren und deren wasserlöslichen Copolymere; Melaminformaldehydsulfonnte, Naphthalinformal-dehydsulfonate, Styrolmaleinsäure- und Vinylethermaleinsäure-Copolymere oder Polyurethanstabilisatoren. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Das bevorzugte Schutzkolloid ist Polyvinylalkohol. Geeigneter Polyvinylalkohol besitzt Hydrolysegrade von 60 bis 100 mol-%, vorzugsweise 70 bis 99 Mol.-%, und Viskositäten der 4 %igen wässrigen Lösungen bei 20 °C von 2 - 70 mPa*s, insbesondere 30 bis 60 mPa*s. Neben "homopolymerem" Polyvinylalkohol, d.h. nur aus Vinylalkohol- und restlichen Vinylacetatgruppen bestehendem Polyvinylalkohol, können copolymere bzw. funktionalisierte Polyvinylalkohole eingesetzt werden, beispielsweise Umsetzungsprodukte des Polyvinylalkohols mit Diketen oder mit Carboxylgruppen, Thiolgruppen, Formamidogruppen, Aminogruppen, Arylaminogruppen, Sulfatgruppen, Sulfonatgruppen, Phosphonatgruppen, quaternäre Ammoniumgruppen und andere funktionelle Gruppen tragende Typen von Polyvinylalkoholen, wie teilacetalisierte Polyvinylalkohole.

Die genannten Schutzkolloide können selbstverständlich auch in Form von Gemischen verwendet werden.

Werden Schutzkolloide eingesetzt, so beträgt deren Menge, bezogen auf die Gesamtmenge der eingesetzten Monomeren, höchstens bis zu 1,0 Gew. %, vorzugsweise bis zu 0,8 Gew. %, und besonders bevorzugt bis zu 0,6 Gew. %. Das Verfahren eignet sich aber auch hervorragend ohne den Einsatz der Schutzkolloide.

Der zur Stabilisierung mitverwendete Emulgator und gegebenenfalls das Schutzkolloid kann entweder zu Beginn der Polymerisation komplett vorgelegt werden oder partiell vorgelegt und partiell dosiert werden oder komplett während der Durchführung der Polymerisation zudosiert werden. Die Dosierung des Emulgators kann getrennt erfolgen oder zusammen mit mindestens einem Monomeren in Form einer Monomeremulsion. Bevorzugt wird der gesamte Emulgator bzw. ein großer Teil davon vorgelegt.

Zum Starten der Polymerisation können die an sich bekannten Starter der radikalischen Polymerisation eingesetzt werden. Beispiele dafür sind Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge $C_8$-$C_{12}$, Tertiärbutyl-hydroperoxid, Ditertiärbutylperoxid, Diisopropylpercarbonat, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid oder Azoinitiatoren, wie z.B. Azoisobuttersäuredinitril oder 2,2'-Azobis-(2-methylpropionamidino)-dihydrochlorid. Die vorgenannten Verbindungen können auch innerhalb eines Redoxsysteme verwendet werden, wobei Übergangsmetallsalze, wie Eisen-II/III-salze, oder andere Reduktionsmittel mitverwendet werden. Als Reduktionsmittel oder Regler können Alkalisalze der Oxymethansulfinsäure, wie Natrium-formaldehydsulfoxylat-dihydrat (Rongalit® C) oder das technische Gemisch von 2-Hydroxy-2-sulfinatessisäuredinatriumsalz, 2-Hydroxy-2-sulfonatessisäuredinatriumsalz und Natriumsufit (Brüggolit® FF6 bzw. Brüggolit® FF7), Mercaptane der Kettenlänge $C_{10}$-$C_{14}$, Buten-(I)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Oxidationsmittel, wie Persulfate, insbesondere Ammoniumpersulfat oder Natriumpersulfat, wie Wasserstoffperoxid und/oder wie Tertiärbutyl-hydroperoxid, oder wasserlösliche Reduktionsmittel, wie Rongalit® C, Brüggolit® FF6, Brüggolit® FF7 und/oder Natriummetabisulfit, oder Redoxsysteme wie Tertiärbutylhydroperoxid mit Rongalit® C oder Brüggolit® FF6 und/oder Brüggolit® FF7 und/oder Natriummetabisulfit mit Wasserstoffperoxid zum Starten der Polymerisation verwendet.

Der bei der Emulsionspolymerisation eingesetzte Starter kann entweder zu Beginn komplett dem Reaktionsansatz zugesetzt werden oder partiell zugesetzt werden und partiell im Verlauf der Polymerisation dosiert werden oder komplett während der Durchführung der Polymerisation zudosiert werden. Bevorzugt wird ein Teil zum Start vorgelegt und ein anderer Teil dosiert.

Zur Steuerung des Molekulargewichts können während der Polymerisation regelnde Substanzen eingesetzt werden. Falls Regler eingesetzt werden, dann üblicherweise in Mengen zwischen 0,01 bis 5,0 Gew.%, bezogen auf die eingesetzten Monomeren, und separat oder auch vorgemischt mit Reaktionskomponenten dosiert. Beispiele solcher Substanzen sind Alkylmerkaptane, wie n-Dodecylmerkaptan, tert.-Dodecylmerkaptan, oder Merkaptocarbonsäuren oder deren Ester, wie Merkaptopropionsäure, Merkaptopropionsäuremethylester, sowie Alkohole oder Aldehyde, wie Isopropanol und Acetaldehyd.

Nach Abschluss der Polymerisation kann zur Restmonomerentfernung in Anwendung bekannter Methoden nachpolymerisiert werden, im Allgemeinen durch mit Redoxsystemen initiierte Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Verfahren zur Entfernung von Restmonomeren sind z.B. aus der WO-A-04/22609 bekannt.

Die erfindungsgemäß hergestellten Polyvinylester-Dispersionen besitzen typischerweise Feststoffgehalte von 20 bis 70 Gew.-%, vorzugsweise 30 bis 65 Gew.-%, und besonders bevorzugt 40 bis 60 Gew.-%.

Der pH-Wert der erfindungsgemäß hergestellten Polyvinylester-Dispersionen liegt typischerweise zwischen 2 und 8, vorzugsweise zwischen 4 und 7.

Die mittlere Teilchengröße beträgt typischerweise weniger als 1,2 $\mu$m, bevorzugt weniger als 1000 nm und besonders bevorzugt weniger als 600 nm (gemessen mittels dynamischer Lichtstreuung (Contin Fit und dw als mittlerer Durchmesser) oder mittels Lichtbeugung (Mastersizer Micro Plus, polydisperse Mie Auswertung, dw als mittlerer Durchmesser)).

Die Viskosität der erfindungsgemäß hergestellten Polyvinylester-Dispersionen liegt typischerweise zwischen 100 mPas und 50.000 mPas, bevorzugt zwischen 100 mPas und 20.000 mPas, und besonders bevorzugt zwischen 100 und 15.000 mPas (gemessen mittels Brookfield Viskosimeter bei 23 °C, 20 rpm und der entsprechenden Spindel für den richtigen Meßbereich).

Die erfindungsgemäß hergestellten Polyvinylester-Dispersionen sind ebenfalls Gegenstand der Erfindung.

Die erfindungsgemäßen Dispersionen können weitere übliche Additive enthalten, die typischerweise bei Klebstoff-Formulierungen oder bei Baustoff-Formulierungen eingesetzt werden. Dazu zählen beispielsweise Filmbildehilfsmittel zur Erniedrigung der Mindestfilmbildetemperatur ("MFT-Erniedriger"), Weichmacher, Puffer, pH-Stellmittel, Dispergiermittel, Entschäumer, Füllstoffe, Farbstoffe, Pigmente, Silan-Kupplungsmittel, Verdickungsmittel, Viskositätsregler, Lösungsmittel, Vernetzungsmittel und/oder Konservierungsmittel.

Die erfindungsgemäßen Polyvinylester-Dispersionen können in den dafür typischen Anwendungsbereichen eingesetzt werden.

Die Dispersionen können als solche oder in Form von in Wasser redispergiebarten Dispersionspulvern eingesetzt werden. Zur besseren Redispergierung können auch zusätzlich Schutzkolloide, wie beispielsweise Polyvinylalkohol und/oder Celluloseether sowie Antibackmittel hinzugegeben werden. Diese Pulver können in an sich bekannter Weise durch Versprühen der Dispersionen erhalten werden.

Beispiele für Einsatzgebiete der erfindungsgemäßen Dispersionen oder Dispersionspulver sind die Verwendung in Farben, Klebstoffen, Textilien, insbesondere in Vliesstoffen, sowie in Bauprodukten

Die erfindungsgemäßen Dispersionen oder Dispersionspulver lassen sich beispielsweise in Bauprodukten, in Verbindung mit hydraulisch abbindenden Bindemitteln, Zementen, beispielsweise Portland-, Aluminat-, Trass-, Hütten-, Magnesia-, Phosphatzement, Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben einsetzen.

Weiterhin werden die erfindungsgemäßen Polymerdispersionen bevorzugt als Klebstoff für beliebige Substrate verwendet, vorzugsweise zum Verkleben von von porösen und semiporösen Substraten. Dazu zählen beispielsweise Verklebungen von Papier, Pappe, Wellpappe, Schaumstoff, Zement, Leder, Textilien oder Preßschichtstoffen gegebenenfalls in Kombination mit nicht porösen Substraten, Kunststofffolien. Beispiele für bevorzugte Verklebungen sind Kombinationen Papier/Papier oder Papier/Kunststofffolie. Weitere bevorzugte Verklebungen sind Kombinationen Kunststofffolie/Kunststofffolie.

Andere Anwendungen liegen in Klebstoffen für den Baubereich als Fußboden-, Wand- oder Deckenklebstoff oder als Möbelfolien- oder Teppichrückenkleber. Weiterhin werden die erfindungsgemäßen Polymerdispersionen bevorzugt als Bindemittel für beliebige Substrate verwendet, beispielsweise als Bindemittel für Holzfaserplatten oder Faserleder sowie Bindemittel für Dämm-Materialien aus Papier- oder Kunststoff-Fasern, als Bindemittel für Textil und Non-Woven (sog. Engineered Fabrics) sowie im Textildruck und als Textilappretur.

Ganz besonders bevorzugt jedoch werden die erfindungsgemäßen Dispersionen als Bindemittel für Dispersionsfarben für den Innenbereich und/oder den Außenbereich eingesetzt.

Diese Anwendungen sind ebenfalls Gegenstand der vorliegenden Erfindung.

Die nachfolgenden Beispiele dienen der Erläuterung der Erfindung ohne diese zu begrenzen. Die in den Beispielen angegebenen Teile und Prozente beziehen sich auf das Gewicht, soweit nicht anders vermerkt.

Messmethoden

Messung der Partikelgrößenverteilung

Die Messung der Partikelgrößenverteilung wurde mit Hilfe des Laserbeugungsgerätes Mastersizer Micro Plus der Firma Malvern durchgeführt. Zur Auswertung der Streudaten wurde die von Malvern zur Verfügung gestellte volumengemittelte "polydisperse Mie"-Auswertung verwendet und $d_w$ als mittleren Durchmesser.

Glasüber-gangstemperatur

Die Messung der Glasübergangstemperatur wurde mit einem Mettler DSC 820 bei 10 K/min durchgeführt. Ausgewertet wurde die zweite Aufheizkurve.

Messung des K-Wertes

Der "K-Wert" ist eine relative Viskositätszahl, die in Analogie zur DIN 53726 bestimmt wird. Zurück geht dieser K-Wert auf eine Formel von FIKENTSCHER, die für bestimmte Polymerlösungen einen Zusammenhang zwischen der relativen Viskosität und der Konzentration des Polymeren in der Lösung (in g/100 ml Lösung) herstellt (H. Fikentscher, Cellulosechemie 1932, 13, p. 58). Gemessen wurde bei 23 °C in DMF als Lösemittel. Der K-Wert korreliert mit dem Molekulargewicht des Polymeren.

Messung der Pigmentverträglichkeit

Die Methode dient zur Überprüfung der Pigmentstabilität von Dispersionen, die besonders für die Produktion von Putzen notwendig ist. Bei der Prüfung wurden 33 g Dispersion (50 %ig) in einem Rührbecher direkt mit 44 g Calciumcarbonat (d50% = 23 $\mu$m) und 22 g Calciumcarbonat (d50% = 5 $\mu$m) vorgemischt und anschließend über einen Zeitraum von einer Minute mit einem Dissolver kleiner Leistung bei einer Drehzahl von 1000 min$^{-1}$ gerührt, bis eine glatte und homogene Mischung entstanden war.

Die Drehzahl des Dissolvers wurde auf 3000 min$^{-1}$ erhöht und die Zeit gestoppt, bis die Viskosität der Mischung so hoch war, das keine ausreichende Durchmischung mehr erfolgte. Die Prüfung wurde in der Regel nach 10 Minuten abgebrochen, wobei pigmentstabile Dispersionen nach diesem Zeitraum noch keinerlei Schädigungen oder Viskositätserhöhungen zeigten.

Messung der Abriebsfestigkeit

Die Überprüfung der Nassabriebbeständigkeit erfolgte gemäß der Norm DIN EN ISO 11998. Der zu prüfende Beschichtungsstoff wurde dabei mit einem Filmziehgerät geeigneter Spaltbreite auf eine Probenfolie aufgezogen und nach der vorgegebenen Trockenzeit gewogen und in einem Scheuerprüfgerät 200 Scheuerzyklen unterworfen. Die Probenfolie wurde dann gewaschen, getrocknet und erneut gewogen. Es wurde der Masseverlust bestimmt, aus dem der mittlere Schichtdickenverlust berechnet wurde. Die Farben wurden gemäß dem Schichtdickenverlust innerhalb der Norm DIN EN 13300 in Nassabriebsklassen (1 bis 5) eingestuft.

Zur Durchführung der Messung wurde die Farbe gut durchgemischt und mit einer Nassfilmdicke von 300 $\mu$m auf eine Lenata-Folie aufgerakelt und unter Normbedingungen (23°C / 50% rel. Feuchte) getrocknet. Nach der Lagerung wurde die beschichtete Folie gewogen und dem Abriebtest unterworfen. Dazu wurde die Folie in ein Scheuerprüfgerät (z.B. Erichsen Modell 494) eingespannt und 200 Zyklen mit dem Scheuervlies abgerieben. Als Scheuervlies kam das Material Scotch Brite Br. 7448, Typ S, Grad UFN zum Einsatz.

Die Folie wurde leicht mit Wasser abgewaschen um abgeriebene Farbreste zu entfernen und danach bis zur Gewichtskonstanz unter Normbedingungen getrocknet. Mit Hilfe der Trockenfilmdichte der Farbe konnte der Verlust der Schichtdicke in $\mu$m berechnet werden.

Messung der Deckkraft / Kontrastverhältnis für weiße oder helle Beschichtungssysteme

Die Überprüfung der Deckvermögens erfolgte gemäß der Norm DIN EN ISO 6504-3. Zur Bestimmung des Kontrastverhältnis wurden schwarzweiße Karten beschichtet und die Farbwerte über den weißen und schwarzen Flächen gemessen. Das Kontrastverhältnis wurde als Verhältnis der Farbwerte auf den weißen und schwarzen Flächen jeder Karte berechnet. Die Farben wurden mit der zugehörigen Ergiebigkeit in m$^2$/l innerhalb der Norm DIN EN 13300 in Kontrastklassen (1 bis 4) eingestuft.

Zur Durchführung der Messung wurde die Farbe gut durchgemischt und mit einer Nassfilmdicke von 150 $\mu$m, 200 $\mu$m und 250 $\mu$m auf schwarzweiße Karten (z.B. Leneta) aufgezogen und 24 h unter Normbedingungen (23°C / 50% rel. Feuchte) getrocknet.

Die Farbwerte der einzelnen Folien über den weißen und schwarzen Flächen wurden bestimmt und daraus das zugehörige Kontrastverhältnis ermittelt. Aus der ermittelten Farbendichte und dem Festkörpergehalt konnte die zugehörige Ergiebigkeit berechnet werden. Zur Bestimmung konnte auch die VdL-Richtlinie VdL-RL 09 eingesetzt werden.

Wasseraufnahme im Film

Ein runder Film mit einer Dicke von ca. 1 mm und einem Durchmesser von 6,5 cm wurde aus der Dispersion hergestellt. Dieser wurde im Vakuum bei einer Temperatur von 40 °C 24 Stunden lang getrocknet. Der Film wird gewogen und dann 24 h im Wasser gelagert und wieder gewogen. Aus der Gwichtsdifferenz läßt sich die Wasseraufnahme in Prozent berechnen.

Beispiel 1 (erfindungsgemäß)

In einer 30 I Druckapparatur mit Rührer, Mantelheizung und Dosierpumpen wurde eine wäßrige Lösung bestehend aus folgenden Bestandteilen vorgelegt:

## EP 2 088 162 B1

Vorlage

| | |
|---|---|
| 9661 g | E-Wasser (entionisiertes Wasser) |
| 543 g | Celvol® 504 (15 %ig in E-Wasser, Polyvinylalkohol der Celanese) |
| 543 g | Emulsogen® EPN 287 (70 %ig in E-Wasser, nichtionischer Emulgator auf Basis eines Ethoxylats von Clariant) |
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| | |
|---|---|
| 256 g | Glycidylmethacrylat |
| 11230 g | Vinylacetat |

Ethylenmenge

| | |
|---|---|
| 1575 g | Ethylen |

Der Polyvinylalkohol wurde zuvor in einer 15 %igen Lösung bei 90 °C 2 Stunden lang gelöst.

Die Apparatur wurde von Luftsauerstoff befreit. 20 % der Monomermischung (Gesamtmenge: 11230 g) wurde in den Reaktor innerhalb 10 min. dosiert. Das Ethylenvenil wurde bei Raumtemperatur geöffnet und Ethylen bis zu einem Druck von 15 bar aufgedrückt. Der Reaktor wurde auf eine Innentemperatur von 65 °C aufgeheizt. Beim Erreichen von 35 °C wurde der Initiator 1 (28,6 g Natriumperoxodisulfat in 227 g E-Wasser) innerhalb von ca. 8 min. hinzugegeben. Nach dem Erreichen von 65 °C wurde das Ethylenventil geöffnet (ca. 60 bar) und es wurden die restlichen 80 % der Monomermischung, innerhalb ca. 45 min. dosiert, daß eine Innentemperatur von ca. 110 °C gehalten werden konnte. Entsprechend mußte die Kühlung eingestellt werden (in diesem Fall bei 95 °C). Sobald die Innentemperatur abzusinken begann, wurde mit der Dosierung von Initiator 2 (16,1 g Natriumperoxodisulfat in 227 g E-Wasser) begonnen (etwa 7 min nach Beginn der Monomerdosierung). Nachdem die Monomerdosierung zu Ende war, lief die Dosierung von Initiator 2 noch etwa 30 min nach. Danach wurde noch eine Stunde bei 85 °C nachgeheizt, um den Restmonomergehalt zu senken.

Charakteristische Daten der Beispieldispersion 1

| | |
|---|---|
| Trockensubstanz: | 54 % |
| pH (Elektrodenmessung): | 5 |
| Viskosität nach Brookfield (23°C, Spindel 4, 20 rpm): | 5100 mPas |
| Restmonomergehalt: | <0,2 % |
| Glasübergangstemperatur des Polymerisats (20 K/min): | 15 °C |
| Teilchengrößenverteilung (PCS, 90 °): | $d_w$ = 220 nm |
| | $d_w/d_n$ = 1,05 |

Beispiel 2 (erfindungsgemäß, weniger Emulgator)-

Es wurde analog Beispiel 1 gearbeitet, aber mit folgenden Bestandteilen:

Vorlage

| | |
|---|---|
| 9661 g | E-Wasser (entionisiertes Wasser) |
| 543 g | Celvol® 504 (15 %ig in E-Wasser, Polyvinylalkohol der Celanese) |
| 370 g | Emulsogen® EPN 287 (70 %ig in E-Wasser, nichtionischer Emulgator auf Basis eines Ethoxylats von Clariant) |
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| | |
|---|---|
| 256 g | Glycidylmethacrylat |
| 11230 g | Vinylacetat |

Ethylenmenge

| | |
|---|---|
| 1575 g | Ethylen |

Charakteristische Daten der Beispieldispersion 2

| | |
|---|---|
| Trockensubstanz: | 53 % |
| pH (Elektrodenmessung): | 4 |
| Viskosität nach Brookfield (23°C, Spindel 4, 20 rpm): | 5600 mPas |
| Restmonomergehalt: | <0,2 % |
| Glasübergangstemperatur des Polymerisats (20 K/min): | 16 °C |
| Teilchengrößenverteilung (PCS, 90 °): | $d_w$ = 205 nm |
| | $d_w/d_n$ = 1,05 |

Beispiel 3 (erfindungsgemäß) - ohne PVOH

Es wurde analog Beispiel 1 gearbeitet, aber mit folgenden Bestandteilen:

Vorlage

| | |
|---|---|
| 9661 g | E-Wasser (entionisiertes Wasser) |
| 543 g | Emulsogen® EPN 287 (70 %ig in E-Wasser, nichtionischer |

(fortgesetzt)

|  | Emulgator auf Basis eines Ethoxylats von Clariant) |
|---|---|
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| 256 g | Glycidylmethacrylat |
|---|---|
| 11230 g | Vinylacetat |

Ethylenmenge

| 1575 g | Ethylen |
|---|---|

Charakteristische Daten der Beispieldispersion 3

| Trockensubstanz: | 54 % |
|---|---|
| pH (Elektrodenmessung): | 4 |
| Viskosität nach Brookfield (23°C, Spindel 4, 20 rpm): | 1100 mPas |
| Restmonomergehalt: | <0,2 % |
| Glasübergangstemperatur des Polymerisats (20 K/min): | 11 °C |
| Teilchengrößenverteilung (PCS, 90 °): | $d_w$ = 282 nm |
|  | $d_w/d_n$ = 1,02 |

Beispiel 4 (erfindungsgemäß) - 1 GT PVOH

Es wurde analog Beispiel 1 gearbeitet, aber mit folgenden Bestandteilen:

Vorlage

| 9661 g | E-Wasser (entionisiertes Wasser) |
|---|---|
| 854 g | Celvol® 504 (15 %ig in E-Wasser, Polyvinylalkohol der Celanese) |
| 543 g | Emulsogen® EPN 287 (70 %ig in E-Wasser, nichtionischer Emulgator auf Basis eines Ethoxylats von Clariant) |
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| | | |
|---|---|---|
| 256 g | Glycidylmethacrylat |
| 11230 g | Vinylacetat |

Ethylenmenge

| | |
|---|---|
| 1575 g | Ethylen |

Charakteristische Daten der Beispieldispersion 4

| | |
|---|---|
| Trockensubstanz: | 53 % |
| pH (Elektrodenmessung): | 4 |
| Viskosität nach Brookfield (23°C, Spindel 4, 20 rpm): | 5300 mPas |
| Restmonomergehalt: | <0,2 % |
| Glasübergangstemperatur des Polymerisats (20 K/min): | 12 °C |
| Teilchengrößenverteilung (PCS, 90 °): | $d_w$ = 211 nm |
| | $d_w/d_n$ = 1,05 |

Beispiel 5 (erfindungsgemäß) - Silan

Es wurde analog Beispiel 1 gearbeitet, aber mit folgenden Bestandteilen:

Vorlage

| | |
|---|---|
| 9661 g | E-Wasser (entionisiertes Wasser) |
| 543 g | Celvol® 504 (15 %ig in E-Wasser, Polyvinylalkohol der Celanese) |
| 543 g | Emulsogen® EPN 287 (70 %ig in E-Wasser, nichtionischer Emulgator auf Basis eines Ethoxylats von Clariant) |
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| | |
|---|---|
| 51,6 g | Silan A 171 |
| 11230 g | Vinylacetat |

Ethylenmenge

**15**

1575 g    Ethylen

Charakteristische Daten der Beispieldispersion 5

| | |
|---|---|
| Trockensubstanz: | 53 % |
| pH (Elektrodenmessung): | 5 |
| Viskosität nach Brookfield (23°C, Spindel 4, 20 rpm): | 4400 mPas |
| Restmonomergehalt: | <0,2 % |
| Glasübergangstemperatur des Polymerisats (20 K/min): | 16 °C |
| Teilchengrößenverteilung (PCS, 90 °): | $d_w$ = 309 nm |
| | $d_w/d_n$ = 1,6 |

Beispiel 6 (erfindungsgemäß) - 100 °C, 90 min Monomerdosierung

Es wurde analog Beispiel 1 gearbeitet, aber mit folgenden Bestandteilen und mit einer Polymerisationstemperatur von 100 °C und mit einer Monomerdosierzeit von 90 min statt 45 min.

Vorlage

| | |
|---|---|
| 9661 g | E-Wasser (entionisiertes Wasser) |
| 543 g | Celvol® 504 (15 %ig in E-Wasser, Polyvinylalkohol der Celanese) |
| 543 g | Emulsogen® EPN 287 (70 %ig in E-Wasser, nichtionischer Emulgator auf Basis eines Ethoxylats von Clariant) |
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| | |
|---|---|
| 256 g | Glycidylmethacrylat |
| 11230 g | Vinylacetat |

Ethylenmenge

1575 g    Ethylen

Charakteristische Daten der Beispieldispersion 6

| | |
|---|---|
| Trockensubstanz: | 55 % |

(fortgesetzt)

| | |
|---|---|
| pH (Elektrodenmessung): | 4,5 |
| Viskosität nach Brookfield (23°C, Spindel 4, 20 rpm): | 4200 mPas |
| Restmonomergehalt: | <0,2 % |
| Glasübergangstemperatur des Polymerisats (20 K/min): | 13 °C |
| Teilchengrößenverteilung (PCS, 90 °): | $d_w$ = 207 nm |
| | $d_w/d_n$ = 1,06 |

Beispiel 7 (erfindungsgemäß) - mit Ethylen Druckstufe

Es wurde analog Beispiel 1 gearbeitet, aber mit folgenden Bestandteilen und mit einer Druckstufe. Zu Beginn wurden nur 5 bar Ethylen aufgedrückt. Der Ethylendruck wurde dann erst nach 25 Minuten Momonerdosierzeit auf 60 bar erhöht, solange bis die gesamte Ethylenmenge polymerisiert war.

Vortage

| | |
|---|---|
| 9661 g | E-Wasser (entionisiertes Wasser) |
| 543 g | Celvol® 504 (15 %ig in E-Wasser, Polyvinylalkohol der Celanese) |
| 543 g | Emulsogen® EPN 287 (70 %ig in E-Wasser, nichtionischer Emulgator auf Basis eines Ethoxylats von Clariant) |
| 423 g | Texapon K12/15® (15 %ig in E-Wasser, ionischer sulfathaltiger Emulgator von Cognis) |
| 217 g | Natriumethensulfonat (30 %ig in E-Wasser) |
| 32,5 g | Natriumacetat |
| 5,1 g | Natriumdisulfit |
| 0,03 g | Mohr'sches Salz |

Monomermischung

| | |
|---|---|
| 256 g | Glycidylmethacrylat |
| 11230 g | Vinylacetat |

Ethylenmenge

| | |
|---|---|
| 1575 g | Ethylen |

Charakteristische Daten der Beispieldispersion 7

| | |
|---|---|
| Trockensubstanz: | 54 % |
| pH (Elektrodenmessung): | 4,5 |
| Viskosität nach Brookfield (23°C, Spindel 4, 20 rpm): | 3200 mPas |
| Restmonomergehalt: | <0,2 % |
| Glasübergangstemperatur des Polymerisats (20 K/min): | 13 °C |
| Teilchengrößenverteilung (PCS, 90 °): | $d_w$ = 220 nm |
| | $d_w/d_n$ = 1,02 |

Beispiel 8 (Vergleich) - niedrige Temperatur

In einer 30 l Druckapparatur mit Rührer, Mantelheizung und Dosierpumpen wurde eine wäßrige Lösung bestehend aus folgenden Bestandteilen vorgelegt:

Vorlage

| | |
|---|---|
| 9700 g | E-Wasser (entionisiertes Wasser) |
| 545 g | Celvol® 504 (15 %ig in E-Wasser, Polyvinylalkohol der Celanese) |
| 545 g | Emulsogen® EPN 287 (70 %ig in E-Wasser, nichtionischer Emulgator auf Basis eines Ethoxylats von Clariant) |
| 425 g | Texapon K12/15® (15 %ig in E-Wasser, ionischer sulfathaltiger Emulgator von Cognis) |
| 218 g | Natriumethensulfonat (30 %ig in E-Wasser) |
| 32,7 g | Natriumacetat |
| 5,1 g | Natriumdisulfit |
| 0,03 g | Mohr'sches Salz |

Monomermischung

| | |
|---|---|
| 260 g | Glycidylmethacrylat |
| 11275 g | Vinylacetat |

Ethylenmenge

1581 g   Ethylen

Der Polyvinylalkohol wurde zuvor in einer 15 %igen Lösung bei 90 °C 2 Stunden lang gelöst.
Die Apparatur wurde von Luftsauerstoff befreit. 5 % der Monomermischung (Gesamtmenge: 13116 g) wurde in den Reaktor innerhalb 5 min. dosiert. Das Ethylenvenil wurde bei Raumtemperatur geöffnet und Ethylen bis zu einem Druck von 15 bar aufgedrückt. Der Reaktor wurde auf eine Innentemperatur von 65 °C aufgeheizt. Beim Erreichen von 35 °C wurde der erste Teil des Initiators (28,6 g Natriumperoxodisulfat in 227 g E-Wasser) innerhalb von ca. 8 min. hinzugegeben. Nach dem Erreichen von 65 °C wurde das Ethylenventil geöffnet (ca. 35 bar) und es wurden die restlichen 95 % der Monomermischung, innerhalb 3 h 30 min. dosiert. 30 min vor Monomerende wurde der zweite Teil des Initiators (13,6 g Natriumperoxodisulfat in 227 g E-Wasser) in 30 min. hinzudosiert. Nachdem die Monomerdosierung zu Ende war, wurde innerhalb von 30 min auf 85 °C aufgeheizt und noch eine Stunde bei 85 °C nachgeheizt, um den Restmonomergehalt zu senken.

Charakteristische Daten der Beispieldispersion 8

| | |
|---|---|
| Trockensubstanz: | 52,0 % |
| pH (Elektrodenmessung): | 4,7 |
| Viskosität nach Brookfield (23°C, Spindel 4, 20 rpm): | 1500 mPas |
| Restmonomergehalt: | <0,2 % |
| Glasübergangstemperatur des Polymerisats (20 K/min): | 13 °C |
| Teilchengrößenverteilung (PCS, 90 °): | $d_w$ = 150 nm |

(fortgesetzt)

$$d_w/d_n = 1{,}02$$

Beispiel 9 - Molekulargewichte:

Die Molekulargewichte der Polymerdispersionen über den Fikenscher Wert (K-Wert) der erfindungsgemäßen Dispersionen (Beispiel 1 - 7) sind in vergleichbarer Höhe mit dem Vergleichsbeispiel (Beispiel 8), vergleiche Tabelle 1.

Tabelle 1: Eigenschaften der Beispiele 9

| | K-Wert des Polymers | Abriebfestigkeit in einer Farbe | Deckkraft in einer Farbe bei einer Ergiebigkeit von 8 $m^2$/l (Klasse II) | Pigmentverträglichkeit in einer Farbe |
|---|---|---|---|---|
| Beispiel 1 (erfindungsgemäß) | 74.4 | 21 $\mu$m | >98 % | > 10 min |
| Beispiel 2 erfindungsgemäß | 70,4 | 21 $\mu$m | >98 % | < 10 min |
| Beispiel 3 (erfindungsgemäß) | 75,3 | 18 $\mu$m | >98 % | > 10 min |
| Beispiel 4 (erfindungsgemäß) | 70,5 | 15 $\mu$m | >98 % | > 10 min |
| Beispiel 5 (erfindungsgemäß) | 74,0 | 32 $\mu$m | >98 % | > 10 min |
| Beispiel 6 (erfindungsgemäß) | 76,4 | 25 $\mu$m | >98 % | > 10 min |
| Beispiel 7 (erfindungsgemäß) | 77,9 | 20 $\mu$m | >98 % | > 10 min |
| Beispiel 8 (Vergleich) | 78,3 | 20 $\mu$m | >98 % | > 10 min |

Beispiel 10: Anwendung in einer Farbrezeptur

Die Abriebfestigkeit einer Farbe, die mit der erfindungsgemäßen Dispersionen aus Beispiel 1 - 7 hergestellt wurde, liegt in vergleichbarer Höhe mit der Farbe, hergestellt mit der Vergleichsdispersion (aus Beispiel 8), vergleiche Tabelle 1.

Die Deckkraft einer Farbe, die mit der erfindungsgemäßen Dispersionen aus Beispiel 1 - 7 hergestellt wurde, liegt in vergleichbarer Höhe mit der Farbe, hergestellt mit der Vergleichsdispersion (aus Beispiel 8), vergleiche Tabelle 1.

Die Pigmentverträglichkeit einer Farbe, die mit der erfindungsgemäßen Dispersionen aus Beispiel 1 - 7 hergestellt wurde, ist vergleichbarer mit der Farbe, hergestellt mit der Vergleichsdispersion (aus Beispiel 8), vergleiche Tabelle 1.

Damit wird gezeigt, daß die wichtigsten Eigenschaften in der Farbanwendung, die mit den erfindungsgemäßen Dispersionen aus Beispiel 1 - 7 hergestellt wurden, vergleichbar sind mit denen einer Farbe, die mit der Vergleichsdispersion hergestellt wurde.

Beispiel 11: Wasseraufnahme im Film

Die Wasseraufnahme in aus den Dispersionen hergestellten Filmen ist bei den erfindungsgemäß hergestellten Dispersionen deutlich niedriger, was mit einer geringeren Wasserempfindlichkeit einhergeht und somit günstiger in der Anwendung ist (Ergebnisse siehe Tabelle 2).

# EP 2 088 162 B1

Tabelle 2: Eigenschaften der Beispiele 11

|  | Wasseraufnahme im Film [%] |
|---|---|
| Beispiel 1 (erfindungsgemäß) | 16 |
| Beispiel 8 (Vergleich) | 20 |

Beispiel 12: Eigenschaften der Dispersionen zur Verwendung als Grundierung

Film auf einer Faserzementplatte

Ein Film wurde aus der Dispersion mit einer Naßfilmdicke von 120 μm auf eine Faserzementplatte (Eterboard der Fa. Rocholl) aufgebracht und 24 h bei 23 °C getrocknet. Danach wurde der Film beurteilt (vergl. Tabelle 3).

Stabilität im verdünnten Zustand

Die Dispersion wurde soweit verdünnt, daß sie einen Feststoffgehalt von 13 % enthielt. Damit wurde die Lagerstabilität (Absetzen) in 100 ml beurteilt (vergl. Tabelle 3).

Tabelle 3: Eigenschaften nach Beispiel 12

|  | Beispiel 1 (erfindungsgemäß) | Beispiel 8 (Vergleich) |
|---|---|---|
| Film auf Faserzementplatte |  |  |
| Oberfläche des Films | glänzend | glänzend |
| Härte des Films | Weich | weich |
| Klebrigkeit des Films | Keine | Keine |
| Lagerstabilität im verdünnten Zustand |  |  |
| Nach 4 Wochen | OK | OK |

Die erfindungsgemäße Dispersion zeigte im Vergleich zur Vergleichsdispersion die gleichen Filmeigenschaften und Lagerstabilitäten und ist damit geeignet für Primeranwendungen.

**Patentansprüche**

1. Verfahren zur Emulsionspolymerisation von radikalisch polymerisierbaren ethylenisch ungesättigten Monomeren ausgewählt aus der Gruppe der Mono- oder Diester von ethylenisch ungesättigten Mono- oder Dicarbonsäuren mit Alkanolen, der Vinylester und/oder der Vinylaromaten und gegebenenfalls weiteren damit copolymerisierbaren Monomeren bei dem mindestens 60% des Gesamtumsatzes der Emulsionspolymerisation bei einer Temperatur von 100°C bis 160°C abläuft, die Emulsionspolymerisation in Gegenwart von Emulgatoren und einer Menge von 0 bis 0,8 Gew. %, bezogen auf die Gesamtmenge der eingesetzten Monomeren, an Schutzkolloid durchgeführt wird, und die Dauer der Polymerisationsphase weniger als 2 Stunden beträgt, wobei unter Polymerisationsphase diejenige Phase verstanden wird, die mit dem Beginn des Monomerumsatzes, erkennbar am Einsetzen der Wärmetönung der Polymerisation, beginnt und die mit dem Erreichen von 95 % des Monomerumsatzes endet.

2. Verfahren gemäß Anspruch 1, **dadurch gekennzeichnet, dass** als Polymerisationsinitiatoren wasserlösliche Initiatoren der radikalischen Polymerisation eingesetzt werden

3. Verfahren gemäß Anspruch 2, **dadurch gekennzeichnet, dass** als Polymerisationsinitiatoren wasserlösliche Oxidationsmittel, wasserlösliche Reduktionsmittel oder Redoxsysteme eingesetzt werden.

4. Verfahren gemäß Anspruch 2, **dadurch gekennzeichnet, dass** das wasserlösliche Oxidationsmittel ausgewählt wird aus der Gruppe der Persulfate, insbesondere Ammoniumpersulfat oder Natriumpersulfat, des Wasserstoffperoxids und/oder des Tertiärbutylhydroperoxids, dass das wasserlösliche Reduktionsmittel ausgewählt wird aus der Gruppe des Natriumformaldehydsulfoxylatdihydrat, des technischen Gemisches von 2-Hydroxy-2-sulfinatessig-säuredinatriumsalz und Natriumsulfit oder von 2-Hydroxy-2-sulfonatessisäure-dinatriumsalz und Natriumsufit und/oder des Natriummetabisulfits, und dass das Redoxsystem ausgewählt wird aus der Gruppe Tertiärbutylhydroperoxid mit Natriumformaldehydsulfoxylatdihydrat oder des technischen Gemisches von 2-Hydroxy-2-sulfinatessigsäuredinatriumsalz und Natriumsulfit und/oder von 2-Hydroxy-2-sulfonatessisäuredinatriumsalz und Natriumsufit oder Natriummetabisulfit mit Wasserstoffperoxid.

5. Verfahren gemäß Anspruch 1, **dadurch gekennzeichnet, dass** die Dauer der Polymerisationsphase weniger als 1,5 Stunden beträgt.

6. Verfahren gemäß Anspruch 5, **dadurch gekennzeichnet, dass** die Dauer der Polymerisationsphase weniger als 1 Stunde beträgt.

7. Verfahren gemäß einem der Ansprüche 1 bis 6, **dadurch gekennzeichnet, dass** die Emulsionspolymerisation zumindest teilweise unter Druck durchgeführt wird.

8. Verfahren gemäß Anspruch 7, **dadurch gekennzeichnet, dass** die Emulsionspolymerisation im Bereich von 10 bis 80 bar Überdruck durchgeführt wird.

9. Verfahren gemäß Anspruch 8, **dadurch gekennzeichnet, dass** mindestens ein gasförmiges Monomer eingesetzt wird, welches unter Druck zugegeben wird und dass die Dosierung des gasförmigen Monomeren erst begonnen wird, nachdem 10 - 50 Gew. % der flüssigen Monomeren im Reaktionsgemisch umgesetzt worden sind.

10. Verfahren gemäß Anspruch 8, **dadurch gekennzeichnet, dass** mindestens ein gasförmiges Monomer eingesetzt wird, welches unter Druck zugegeben wird und dass die Dosierung des gasförmigen Monomeren zu Beginn der Emulsionspolymerisationspolymerisation begonnen wird, so dass die Umsetzung im Reaktionsgemisch zusammen mit den flüssigen Monomeren erfolgt.

11. Verfahren gemäß einem der Ansprüche 1 bis 10, **dadurch gekennzeichnet, dass** es sich um ein Dosierverfahren handelt, bei dem 5 bis 50 Gew. % des oder der Monomeren, bezogen auf die Gesamtmenge an Monomer, vorgelegt wird.

12. Verfahren gemäß einem der Ansprüche 1 bis 11, **dadurch gekennzeichnet, dass** als radikalisch polymerisierbare Monomere Ester ethylenisch ungesättigter Mono- oder Dicarbonsäuren eingesetzt werden oder Ester ethylenisch ungesättigter Mono- oder Dicarbonsäuren in Kombination mit ein oder mehreren damit copolymerisierbaren ethylenisch ungesättigten Monomeren.

13. Verfahren gemäß einem der Ansprüche 1 bis 11, **dadurch gekennzeichnet, dass** als radikalisch polymerisierbare Monomere Vinylester eingesetzt werden, oder Vinylester in Kombination mit ein oder mehreren damit copolymerisierbaren ethylenisch ungesättigten Monomeren.

14. Verfahren gemäß Anspruch 13, **dadurch gekennzeichnet, dass** die bei der Polymerisation eingesetzten Monomeren so ausgewählt werden, dass Homo-oder Copolymerisate entstehen, die ausgewählt werden aus der Gruppe der Vinylacetat-Homopolymerisate, der Copolymerisate von Vinylacetat mit einem oder mehreren weiteren Vinylestern, der Copolymerisate von Vinylacetat mit einem oder mehreren weiteren Vinylestern und mit einem oder mehreren Acrylsäureestern und/oder Methacrylsäureestern, der Copolymerisate von Vinylacetat mit Ethylen, der Copolymerisate von Vinylacetat mit Ethylen und mit einem oder mehreren weiteren Vinylestern, der Copolymerisate von Vinylacetat mit Ethylen und mit einem oder mehreren Acrylsäureestern und/oder Methacrylsäureestern, der Copolymerisate von Vinylacetat mit Ethylen und mit einem oder mehreren ethylenisch ungesättigten Epoxidverbindungen, der Copolymerisate von Vinylacetat mit Ethylen und mit einem oder mehreren ethylenisch ungesättigten Silanen, der Copolymerisate von Vinylacetat mit Ethylen und mit einem oder mehreren ethylenisch ungesättigten Epoxidverbindungen und mit einem oder mehreren ethylenisch ungesättigten Silanen oder der Copolymerisate von Vinylacetat mit Ethylen und mit Vinylchlorid

15. Verfahren gemäß Anspruch 13, **dadurch gekennzeichnet, dass** die Polymerisation als Druckpolymerisation durchgeführt wird und dass als Monomere Vinylacetat und Ethylen oder Vinylacetat, Ethylen und weitere damit copolymerisierbare Monomere eingesetzt werden, wobei die Copolymerisation in Gegenwart von nichtionischen Emulgatoren gegebenenfalls kombiniert mit Polyvinylalkohol oder in Gegenwart von nichtionischen sowie anionischen Emulgatoren gegebenenfalls kombiniert mit Polyvinylalkohol erfolgt.

21

**16.** Verfahren gemäß Anspruch 15, **dadurch gekennzeichnet, dass** es sich bei den weiteren mit Vinylacetat und Ethylen copolymerisierbaren Monomeren um Acrylsäureester, Methacrylsäureester und/oder weitere Vinylester und/oder ethylenisch ungesättigte Epoxidverbindungen und/oder ethylenisch ungesättigte Silane handelt.

**Claims**

**1.** A process for the emulsion polymerization of free-radically polymerizable ethylenically unsaturated monomers selected from the group of the monoesters or diesters of ethylenically unsaturated monocarboxylic or dicarboxylic acids with alkanols, of the vinyl esters and/or of the vinylaromatics and, if desired, further monomers copolymerizable therewith, in which at least 60% of the total conversion in the emulsion polymerization takes place at a temperature of 100°C to 160°C, the emulsion polymerization is carried out in the presence of emulsifiers and of an amount of 0% to 0.8% by weight, based on the total amount of the monomers used, of protective colloid, and the duration of the polymerization phase is less than 2 hours, the polymerization phase being understood to be the phase which commences with the beginning of monomer conversion, recognizable from the onset of a change in heat of the polymerization, and which ends with the attainment of 95% of the monomer conversion.

**2.** The process as claimed in claim 1, wherein water-soluble initiators of the free-radical polymerization are used as polymerization initiators.

**3.** The process as claimed in claim 2, wherein water-soluble oxidizing agents, water-soluble reducing agents or redox systems are used as polymerization initiators.

**4.** The process as claimed in claim 2, wherein the water-soluble oxidizing agent is selected from the group of persulfates, especially ammonium persulfate or sodium persulfate, hydrogen peroxide and/or tert-butyl hydroperoxide; wherein the water-soluble reducing agent is selected from the group of sodium formaldehyde-sulfoxylate dihydrate, the technical mixture of 2-hydroxy-2-sulfinateacetic acid disodium salt and sodium sulfite or of 2-hydroxy-2-sulfonateacetic acid disodium salt and sodium sulfite, and/or of sodium metabisulfite; and wherein the redox system is selected from the group of tert-butyl hydroperoxide with sodium formaldehyde-sulfoxylate dihydrate or the technical mixture of 2-hydroxy-2-sulfinateacetic acid disodium salt and sodium sulfite and/or of 2-hydroxy-2-sulfonateacetic acid disodium salt and sodium sulfite, or sodium metabisulfite with hydrogen peroxide.

**5.** The process as claimed in claim 1, wherein the duration of the polymerization phase is less than 1.5 hours.

**6.** The process as claimed in claim 5, wherein the duration of the polymerization phase is less than 1 hour.

**7.** The process as claimed in any of claims 1 to 6, wherein the emulsion polymerization is carried out at least partly under pressure.

**8.** The process as claimed in claim 7, wherein the emulsion polymerization is carried out in the range from 10 to 80 bar overpressure.

**9.** The process as claimed in claim 8, wherein at least one gaseous monomer is used which is added under pressure and wherein the metering of the gaseous monomer is commenced only after 10-50% by weight of the liquid monomers in the reaction mixture have undergone conversion.

**10.** The process as claimed in claim 8, wherein at least one gaseous monomer is used which is added under pressure and wherein the metering of the gaseous monomer is commenced at the beginning of the emulsion polymerization, such that the conversion takes place in the reaction mixture together with the liquid monomers.

**11.** The process as claimed in any of claims 1 to 10, wherein said process is a metering process in which 5% to 50% by weight of the monomer or monomers, based on the total amount of monomer, is included in the initial charge.

**12.** The process as claimed in any of claims 1 to 11, wherein free-radically polymerizable monomers used are esters of ethylenically unsaturated monocarboxylic or dicarboxylic acids or esters of ethylenically unsaturated monocarboxylic or dicarboxylic acids in combination with one or more ethylenically unsaturated monomers copolymerizable therewith.

**13.** The process as claimed in any of claims 1 to 11, wherein free-radically polymerizable monomers used are vinyl esters, or vinyl esters in combination with one or more ethylenically unsaturated monomers copolymerizable therewith.

**14.** The process as claimed in claim 13, wherein the monomers used in the polymerization are selected so as to form homopolymers or copolymers which are selected from the group consisting of vinyl acetate homopolymers, copolymers of vinyl acetate with one or more other vinyl esters, copolymers of vinyl acetate with one or more other vinyl esters and with one or more acrylic esters and/or methacrylic esters, copolymers of vinyl acetate with ethylene, copolymers of vinyl acetate with ethylene and with one or more other vinyl esters, copolymers of vinyl acetate with ethylene and with one or more acrylic esters and/or methacrylic esters, copolymers of vinyl acetate with ethylene and with one or more ethylenically unsaturated epoxide compounds, copolymers of vinyl acetate with ethylene and with one or more ethylenically unsaturated silanes, copolymers of vinyl acetate with ethylene and with one or more ethylenically unsaturated epoxide compounds and with one or more ethylenically unsaturated silanes, or copolymers of vinyl acetate with ethylene and with vinyl chloride.

**15.** The process as claimed in claim 13, wherein the polymerization is performed as a pressure polymerization and wherein monomers used are vinyl acetate and ethylene or vinyl acetate, ethylene and further monomers copolymerizable therewith, the copolymerization taking place in the presence of nonionic emulsifiers optionally in combination with polyvinyl alcohol, or in the presence of nonionic and anionic emulsifiers optionally in combination with polyvinyl alcohol.

**16.** The process as claimed in claim 15, wherein the other monomers copolymerizable with vinyl acetate and ethylene are acrylic esters, methacrylic esters and/or other vinyl esters and/or ethylenically unsaturated epoxide compounds and/or ethylenically unsaturated silanes.

**Revendications**

**1.** Procédé pour la polymérisation en émulsion de monomères à insaturation éthylénique polymérisables par polymérisation radicalaire, choisis dans le groupe des mono- ou des diesters d'acides mono- ou dicarboxyliques à insaturation éthylénique et des alcanols, des esters vinyliques et/ou des composés vinylaromatiques, et éventuellement d'autres monomères, co-polymérisables avec les monomères ci-dessus, dans lequel au moins 60% de la réaction totale de la polymérisation en émulsion se déroule à une température de 100 à 160°C, dans lequel la polymérisation en émulsion est mise en oeuvre en présence d'émulsifiants et d'une quantité de 0 à 0,8% en poids, par rapport à la quantité totale des monomères utilisés, d'un colloïde protecteur, dans lequel la durée de la phase de polymérisation est inférieure à 2 heures, et, dans lequel par phase de polymérisation, on entend la phase commençant au début de la réaction des monomères, reconnaissable par le dégagement de chaleur de la polymérisation, et se terminant quand 95% de la réaction des monomères est atteinte.

**2.** Procédé selon la revendication 1, **caractérisé en ce qu'**on utilise en tant qu'amorceurs de polymérisation des amorceurs de polymérisation radicalaire solubles dans l'eau.

**3.** Procédé selon la revendication 2, **caractérisé en ce qu'**on utilise en tant qu'amorceurs de polymérisation des oxydants solubles dans l'eau, des systèmes rédox ou des réducteurs solubles dans l'eau.

**4.** Procédé selon la revendication 2, **caractérisé en ce que** l'oxydant soluble dans l'eau est choisi dans le groupe des persulfates, en particulier le persulfate d'ammonium ou le persulfate de sodium, du péroxyde d'hydrogène et/ou de l'hydropéroxyde de tert-butyle, **en ce que** le réducteur soluble dans l'eau est choisi dans le groupe du formaldéhydesulfoxylate de sodium dihydraté, du mélange technique du sel disodique de l'acide 2-hydroxy-2-sulfinato-acétique et du sulfite de sodium, ou du sel disodique de l'acide 2-hydroxy-2-sulfonato-acétique et du sulfite de sodium et/ou du métabisulfite de sodium, et **en ce que** le système rédox est choisi dans le groupe consistant en l'hydroperoxyde de tert-butyle avec le formaldéhydesulfoxylate de sodium dihydraté, ou en le mélange technique du sel disodique de l'acide 2-hydroxy-2-sulfinato-acétique et du sulfite de sodium et/ou du sel disodique de l'acide 2-hydroxy-2-sulfonate acétique et du sulfite de sodium ou du bisulfite de sodium avec le peroxyde d'hydrogène.

**5.** Procédé selon la revendication 1, **caractérisé en ce que** la durée de la phase de polymérisation est inférieure à 1,5 heures.

**6.** Procédé selon la revendication 5, **caractérisé en ce que** la durée de la phase de polymérisation est inférieure à 1 heure.

**7.** Procédé selon l'une des revendications 1 à 6, **caractérisé en ce que** la polymérisation en émulsion est au moins partiellement mise en oeuvre sous pression.

**8.** Procédé selon la revendication 7, **caractérisé en ce que** la polymérisation en émulsion est mise en oeuvre sous une surpression comprise dans la plage de 10 à 80 bar.

**9.** Procédé selon la revendication 8, **caractérisé en ce qu'**on utilise au moins un monomère gazeux, qui est ajouté sous pression, et que le dosage du monomère gazeux ne commence qu'après que 10 à 50% en poids du monomère liquide se trouvant dans le mélange réactionnel aient été mis à réagir.

**10.** Procédé selon la revendication 8, **caractérisé en ce qu'**on utilise au moins un monomère gazeux, qui est ajouté sous pression, et que le dosage du monomère gazeux commence au début de la polymérisation en émulsion, de telle sorte que la réaction ait lieu dans le mélange réactionnel en même temps qu'avec les monomères liquides.

**11.** Procédé selon l'une des revendications 1 à 10, **caractérisé en ce qu'**il s'agit d'un procédé de dosage dans lequel emploie 5 à 50% en poids du ou des monomères, par rapport à la quantité totale de monomères.

**12.** Procédé selon l'une des revendications 1 à 11, **caractérisé en ce qu'**on utilise en tant que monomères polymérisables par polymérisation radicalaire des esters d'acides mono- ou dicarboxyliques à insaturation éthylénique, ou des esters d'acides mono- ou dicarboxyliques à insaturation éthylénique en combinaison avec un ou plusieurs monomères à insaturation éthylénique pouvant être co-polymérisés avec eux.

**13.** Procédé selon l'une des revendications 1 à 11, **caractérisé en ce qu'**on utilise en tant que monomères polymérisables par polymérisation radicalaire des esters vinyliques, ou des esters vinyliques en combinaison avec un ou plusieurs monomères à insaturation éthylénique co-polymérisables avec eux.

**14.** Procédé selon la revendication 13, **caractérisé en ce que** les monomères utilisés lors de la polymérisation sont choisis de façon que se forment des homo- ou des co-polymères, qui sont choisis dans le groupe consistant en les homopolymères de l'acétate de vinyle, les co-polymères de l'acétate de vinyle et d'un ou plusieurs autres esters vinyliques, les co-polymères de l'acétate de vinyle et d'un ou plusieurs autres esters vinyliques et d'un ou plusieurs esters de l'acide acrylique et/ou esters de l'acide méthacrylique, les co-polymères de l'acétate de vinyle et de l'éthylène, les co-polymères de l'acétate de vinyle et de l'éthylène et d'un ou plusieurs autres esters vinyliques, les co-polymères de l'acétate de vinyle et de l'éthylène et d'un ou plusieurs esters de l'acide acrylique et/ou esters de l'acide méthacrylique, les co-polymères de l'acétate de vinyle et de l'éthylène et d'un ou plusieurs composés époxydiques à insaturation éthylénique, les co-polymères de l'acétate de vinyle et de l'éthylène et d'un ou plusieurs silanes à insaturation éthylénique, les co-polymères de l'acétate de vinyle et de l'éthylène et d'un ou plusieurs composés époxydiques à insaturation éthylénique et un ou plusieurs silanes à insaturation éthylénique, ou les co-polymères de l'acétate de vinyle et de l'éthylène et du chlorure de vinyle.

**15.** Procédé selon la revendication 13, **caractérisé en ce que** la polymérisation consiste en une polymérisation sous pression, et que l'on utilise en tant que monomères l'acétate de vinyle et l'éthylène ou l'acétate de vinyle, l'éthylène et d'autres monomères co-polymérisables avec eux, la co-polymérisation étant effectuée en présence d'émulsifiants non ioniques, éventuellement en combinaison avec un poly(alcool vinylique), ou en présence d'émulsifiants non ioniques, ainsi qu'anioniques, éventuellement en combinaison avec un poly(alcool vinylique).

**16.** Procédé selon la revendication 15, **caractérisé en ce que** les autres monomères co-polymérisables avec l'acétate d'éthyle et l'éthylène, consistent en esters de l'acide acrylique, esters de l'acide méthacrylique et/ou autres esters vinyliques et/ou composés époxydiques à insaturation éthylénique et/ou silanes à insaturation éthylénique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7082304 A
- WO 2005016977 A1
- EP 1491558 A1
- EP 0486262 A1
- WO 2004096871 A1
- WO 2004113392 A1
- WO 2005000916 A1
- DE 102005054904 A1
- DE 10335958 A1
- WO 0422609 A

**In der Beschreibung aufgeführte Nicht-Patentliteratur**

- *Dechema Monographs,* 2001, vol. 137, 653-9
- **H. Fikentscher.** *Cellulosechemie,* 1932, vol. 13, 58